# EUROPEAN PATENT APPLICATION

(11) **EP 1 681 272 A1**
(43) Date of publication of application: **19.07.2006**
(21) Application number: 04746099.3
(22) Date of filing: 18.06.2004
(51) Int. Cl.: C02F 1/46, C02F 1/68, C02F 1/28, C02F 1/44

(54) **MINERAL WATER SUPPLY APPARATUS**

(30) Priority: 20.10.2003 JP 2003358977
(71) Applicant: Sanden Corporation, Isesaki-shi, Gunma 372-8502 (JP)
(72) Inventor: ITO, Miwako, Sanden Corporation, Isesaki-shi, Gunma 372-8502 (JP); WATANABE, Kazushige, Sanden Corporation, Isesaki-shi, Gunma 372-8502 (JP)
(74) Representative: Haley, Stephen
(86) International application number: PCT/JP2004/008597
(87) International publication number: WO 2005/037720

(57) **Abstract**

By supplying DC to electrodes (142a and 142b), chlorine-ion containing water is electrolyzed and acid water and alkali water are generated. Mineral eluted substances (141) react with the acid water to elute mineral components. Moreover, by electrolyzing the chlorine-ion containing water, the hypochlorous concentration of the chlorine-ion containing water increases. Mineral water is led into a cold water storage tank (4). Thereby, mineral water is supplied from the cold water storage tank (4) and moreover, breeding of bacteria is restrained in the cold water storage tank (4).

## Description

### TECHNICAL FIELD

The present invention relates to an apparatus for supplying mineral water for cooling or heating and supplying drinking water such as natural water.

### BACKGROUND ART

The apparatus for supplying mineral water disclosed in Japanese Patent Publication No. 2000-335691 has been known so far as this type of apparatus for supplying mineral water.

This apparatus for supplying mineral water has a mineral water storage tank in which mineral water is stored, a cold water storage tank in which mineral water led out of the mineral water storage tank is stored and cooled, and a hot water storage tank in which mineral water led out of a mineral water vessel is stored and heated. When a user wants cold water, the mineral water in the cold water storage tank is supplied or when the user wants hot water, the mineral water in the hot water storage tank is supplied.

In the case of this apparatus for supplying mineral water, because the temperature of the hot water in the hot water storage tank is kept at 80 to 90°C, preventive measures for breeding of bacteria in the hot water storage tank are not greatly necessary. However, when cold water is stored in the cold water storage tank for a long time, bacteria may breed in the cold water storage tank. Therefore, it is indispensable to clean the cold water tank or purify the mineral water in the cold water storage tank.

Therefore, in this apparatus for supplying mineral water, an ultraviolet sterilizer is set in the cold water storage tank to prevent bacteria from breeding by applying ultraviolet radiation into the cold water storage tank from the ultraviolet lamp of the ultraviolet sterilizer to prevent bacteria from breeding.
[Patent Document 1]: Japanese Patent Publication No. 2000-335691

### DISCLOSURE OF THE INVENTION

### PROBLEMS TO BE SOLVED BY THE INVENTION

However, in the case of a conventional apparatus for supplying mineral water, because an ultraviolet lamp is a consumable having a short service life, ultraviolet lamps must be frequently replaced and the running cost may increase.

Moreover, a cleaning method different from that of the apparatus for supplying mineral water is proposed. The cleaning method is a method for regularly administering a medicine to a cold water storage tank to restrain breeding of bacteria in the cold water storage tank or kill the bacteria.

However, when using the cleaning method, a medicine must be regularly administered without fail and therefore, this is troublesome.

The present invention is made to solve the above problems and its object is to provide an apparatus for supplying mineral water capable of generating mineral water by a mineral water generation unit and at the same time, increasing the concentration of hypochlorous acid and efficiently sterilizing a cold water storage tank.

### MEANS FOR SOLVING THE PROBLEMS

An apparatus for supplying mineral water of the present invention includes a mineral water generation means having an electrolytic bath in which chlorine-ion containing water is stored, a mineral eluting electrode for applying a DC voltage to the chlorine-ion containing water to electrolyze the chlorine-ion containing water, and a mineral eluted substance, a mineral water leading means for leading the mineral water generated by the mineral water generation means, a cold water storage tank in which the mineral water led through the mineral water leading means is stored and cooled, and cold water supply means for supplying the mineral water in the cold water storage tank.

According to the present invention, by supplying a DC to a mineral water eluting electrode, chlorine-ion containing water is electrolyzed and acid water and alkali water are generated. The mineral eluted substance reacts with acid water to elute a mineral component. Moreover, by electrolyzing the chlorine-ion containing water, the concentration of hypochlorous acid of chlorine-ion containing water increases. As a result, mineral water having an increased hypochlorous concentration is generated. This mineral water is led to a cold water storage tank through the mineral water leading means.

Moreover, it is also allowed to set a return pipe for returning the cold water in the cold water storage tank to the mineral water generation means and circulating mineral water between the cold water storage tank and the mineral water generation unit. Thereby, it is possible to prevent the hypochlorous concentration in the cold water storage tank from decreasing.

Furthermore, it is allowed to supply carbon dioxide gas from a carbon dioxide cylinder into the cold water storage tank. As a result, because carbonated water is generated in the cold water storage tank, breeding of bacteria is restrained by the bactericidal function of the carbonated water.

### ADVANTAGES OF THE INVENTION

According to the present invention, mineral water is supplied from a cold water storage tank and moreover, mineral water having an increased hypochlorous concentration is stored in the cold water storage tank. Therefore, breeding of bacteria is restrained in the cold water storage tank and thereby, an ultraviolet sterilizer for sterilizing the mineral water is unnecessary.

### BRIEF DESCRIPTION OF THE DRAWINGS

FIG. 1 is a water circuit diagram of an apparatus for supplying mineral water of first embodiment;
FIG. 2 is a front sectional view of a mineral water generation unit of the first embodiment;
FIG. 3 is a side sectional view of the mineral water generation unit of the first embodiment;
FIG. 4 is a water circuit diagram of an apparatus for supplying mineral water of second embodiment;
FIG. 5 is a water circuit diagram of an apparatus for supplying mineral water of third embodiment;
FIG. 6 is a water circuit diagram of an apparatus for supplying mineral water of fourth embodiment;
FIG. 7 is a water circuit diagram of an apparatus for supplying mineral water of fifth embodiment;
FIG. 8 is a water circuit diagram of an apparatus for supplying mineral water of sixth embodiment;
FIG. 9 is a water circuit diagram of an apparatus for supplying mineral water of seventh embodiment;
FIG. 10 is a water circuit diagram of an apparatus for supplying mineral water of eighth embodiment;
FIG. 11 is a water circuit diagram of an apparatus for supplying mineral water of ninth embodiment;
FIG. 12 is a water circuit diagram of an apparatus for supplying mineral water of tenth embodiment;
FIG. 13 is a water circuit diagram of an apparatus for supplying mineral water of eleventh embodiment;
FIG. 14 is a water circuit diagram of an apparatus for supplying mineral water of twelfth embodiment; and
FIG. 15 is a water circuit diagram of an apparatus for supplying mineral water of thirteenth embodiment.

### DESCRIPTION SYMBOLS

- 1: mineral water generation means
- 2 and 2a: purifying bath
- 3: pump
- 4: cold water storage tank
- 4a: carbonator tank
- 5: hot water storage tank
- 11: carbon dioxide cylinder
- 140: electrolytic bath
- 142a and 142b: electrodes
- A: mineral-water generation and purifying portion
- B: cold-and-hot generation portion

### BEST MODE FOR CARRYING OUT THE INVENTION

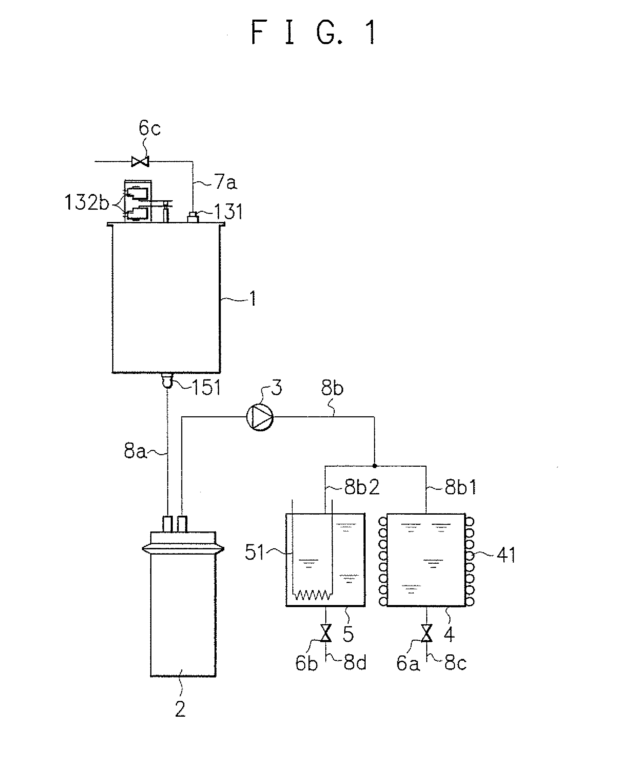

FIGS. 1 to 3 show first embodiment of an apparatus for supplying mineral water of the present invention. First, a schematic configuration of the apparatus for supplying mineral water is described by referring to FIG. 1.

The apparatus for supplying mineral water has a mineral water generation unit 1 for generating mineral water, purifying bath 2, pump 3, cold water storage tank 4, hot water storage tank 5, cold water supply valve 6a, hot water supply valve 6b, and water supply valve 6c.

The water supply valve 6c is set to a water supply pipe 7a for supplying tap water (chlorine-ion containing water) to the water generation unit 1. The mineral water discharged from the mineral water generation unit 1 is supplied to the purifying bath 2 through a first leading pipe 8a. The pump 3 is set to a second leading pipe 8b. The front end of the second leading pipe 8b is branched into two pipes. The front end of one branch pipe 8b1 is connected to the cold water storage tank 4 and the front end of the other branch pipe 8b2 is connected to the hot water storage tank 5. Cold water supplied from the cold water storage tank 4 is supplied to a pumper through a cold water supply pipe 8c. The cold water supply valve 6a for controlling circulation of cold water is set to the cold water supply pipe 8c. Hot water supplied from the hot water storage tank 5 is supplied to the user through a hot water supply pipe 8d. The hot waver supply valve 6b for controlling circulation of hot water is set to the hot water supply pipe 8d.

In this case, the first leading pipe 8a, second leading pipe 8b, branch pipes 8b1 and 8b2, purifying bath 2, and pump 3 constitute mineral water leading means for leading the mineral water discharged from the mineral water generation unit 1 to the cold water storage tank 4 and hot water storage tank 5.

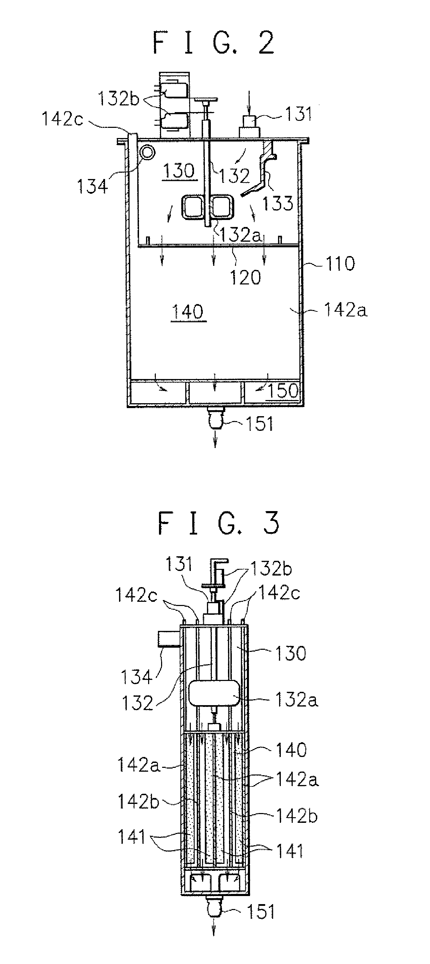

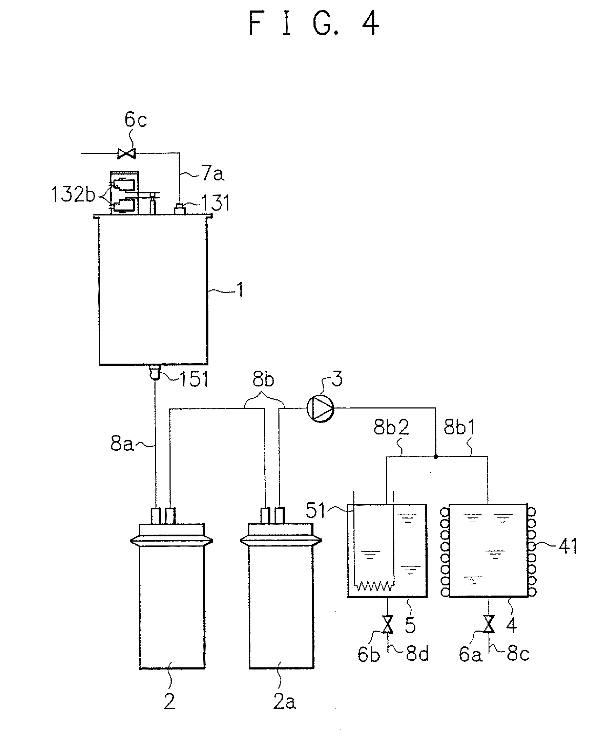

In the case of these pipes of water units, the mineral water generation unit 1 is constituted as shown in FIGS. 2 and 3. The mineral water generation unit 1 has a flat boxy bath body 110. The inside of the bath body 110 is partitioned into an upper portion and a lower portion through a partition plate 120. A storage bath 130 to which tap water are supplied is formed above the partition plate 120. An electrolytic bath 140 for electrolyzing chlorine-ion containing water is formed under the partition plate 120.

A water leading tube 131 to which the front end of the water supply pipe 7a is connected is set to the upper plate of the storage bath 130. Thereby, tap water is led into the storage bath 130 through the water leading tube 131. Moreover, a water level detector 132 is set to the storage bath 130. The water level detector 132 is constituted by a float 132a and microswitch 132b. The float 132a vertically moves by following the water level of the storage bath 130. The microswitch 132b detects upper and lower positions of the float 132a. The water supply valve 6c is controlled so as to be opened or closed in accordance with a detection signal of the microswitch 132b and the water level of the storage bath 130 is maintained at a predetermined level. Furthermore, a guide plate 133 is set in the storage bath 130. The guide plate 133 guides the tap water incoming from the water leading tube 131 to a position close to the center of the storage bath 130 so that the tap water circulates around the whole of the storage bath 130. When water of allowable quantity or more enters the storage bath 130, water is discharged to the outside of the storage bath 130 through an overflow pipe 134.

The electrolytic bath 140 includes a plurality of mineral eluted substances 141 packed into a flat case and a plurality of electrodes 142a and 142b. The mineral eluted substances 141 and the electrodes 142a and 142b are alternately set. The mineral eluted substances 141 use granulated or powdered coral sand, granite porphyry, or mineral stone. Moreover, the electrodes 142a and 142b are connected to an external DC power source. When supplying DC to the electrodes 142a and 142b at the both sides of the mineral eluted substances 141, mineral components are eluted from the mineral eluted substances 141.

A step of eluting the mineral components is described below in detail. When supplying DC to the electrodes 142a and 142b, a DC voltage is applied to chlorine-ion containing water. By applying the DC voltage, a reaction of 4H₂O→4H⁺+2O₂+4e⁻ occurs at the positive electrode 142a side, the hydrogen ion concentration increases, and acid water is generated. At the negative electrode 142b side, a reaction of 4H₂O+4e⁻→2H₂+4OH⁻ occurs and alkali water is generated. Then, the mineral eluted substance 141 (such as calcium carbonate; CaCO₃) reacts with acid water to become CaCO₃+2H⁺→Ca²⁺+H₂O+CO₂ and mineral ions (Ca²⁺) are eluted.

The terminal 142c of the electrodes 142a and 142b penetrates the partition plate 120, protrudes from the upper plate of the storage bath 130, and connects with a power source.

A confluent chamber 150 for making the mineral water generated in the electrolytic bath 140 interflow under the electrolytic bath 140. The mineral water in the confluent chamber 150 is led out to the first leading pipe 8a through the leading tube 151.

By constituting the mineral water generation unit 1 as described above, water flows as shown by arrows in FIGS. 1 and 2. That is, tap water flows from the water supply pipe 7a to the water leading tube 131, partition plate 120, electrolytic bath 140, confluent chamber 150, and leading tube 151 and mineral water is led out to the first leading pipe 8a.

A filter of active carbon or the like is packed into the purifying bath 2. When mineral water passes through the filter, lime smell, mold smell, trihalomethane, and organic substance are adsorbed and removed.

A cooling coil 41 is wound around the cooling water storage tank 4. The refrigerant of a not-illustrated refrigerator circulates in the cooling coil 41. Thereby, the mineral water in the cooling water storage tank 4 is cooled.

The hot water storage tank 5 includes a heater 51. The mineral water in the hot water storage tank 5 is heated by the heater 51.

According to this embodiment, the mineral water generated by the mineral water generation unit 1 flows from the mineral water generation unit 1 to the first leading pipe 8a, purifying bath 2, second leading pipe 8b, cooling water storage tank 4, and hot water storage tank 5 in order by driving of the pump 3. Thereby, the mineral water can be supplied from the cold water storage tank 4 and heated mineral water can be supplied from the hot water storage tank 5.

Moreover, because a DC voltage is applied to chlorine-ion containing water through the electrodes 142a and 142b, the hypochlorous concentration of mineral water increases. Therefore, it is possible to efficiently restrain breeding of bacteria in the cold water storage tank 4 without separately using a medicine.

FIG. 4 shows second embodiment of an apparatus for supplying mineral water of the present invention. A component same as that of the first embodiment is described by using the same symbol. In the case of this embodiment, another purifying bath 2a separately from the purifying bath 2a is set to the second leading pipe 8b. The purifying bath 2a is packed with a hollow-yarn film module so as to seize protozoa and various fungi.

According to this embodiment, one purifying bath 2 removes lime smell, mold smell, trihalomethane, and organic substance and the other purifying bath 2a seizes protozoa and various fungi. Therefore, the purifying capacity of mineral water is further improved. It is also allowed to use the filter member of the other purifying bath 2a, into which active carbon and a hollow-yarn film module are packed. Description of other configurations and functions is omitted because the configurations and functions are the same as those of the first embodiment.

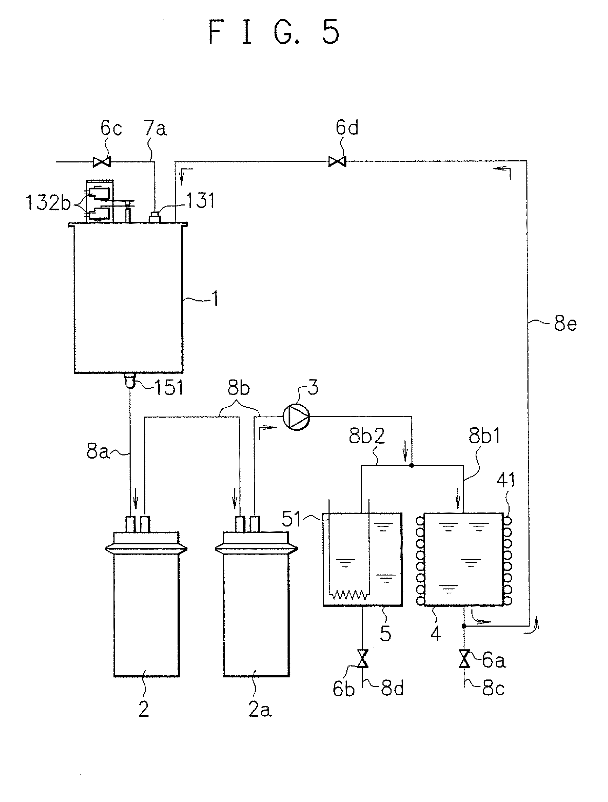

FIG. 5 shows third embodiment of an apparatus for supplying mineral water of the present invention. A component same as that of the second embodiment is described by using the same symbol. This embodiment has a return pipe 8e for returning the mineral water in the cold water storage tank 4 to the mineral water generation unit 1. An end of the return pipe 8e is connected between the cold water storage tank 4 and the cold water supply valve 6a in the cold water supply pipe 8c. The other end of the return pipe 8e is connected to the mineral water generation unit 1. Moreover, a return valve 6d for controlling circulation of mineral water in the return pipe 8e is set to the return pipe 8e.

According to this embodiment, when opening the return valve 6d and driving the pump 3, mineral water circulates as shown by the continuous line arrow in FIG. 5. That is, the mineral water in the cold water storage tank 4 flows from the cold water supply pipe 8d to return pipe 8e, return valve 6d, and mineral water generation unit 1 in order. Moreover, the mineral water in the mineral water generation unit 1 flows into the cold water storage tank 4 similarly to the case of the second embodiment.

Thus, it is possible to replace the mineral water in the cold water storage tank 4 with the mineral water newly generated by the mineral water generation unit 1. As a result, it is possible to keep the hypochlorous concentration at a predetermined value. Moreover, it is possible to sterilize a mineral-water supply pipe system.

Furthermore, when applying a DC current to the electrodes 142a and 142b at the same time as circulation of the above mineral water, the sterilizing effect of the mineral-water supply pipe system is further improved.

Furthermore, when the cold water supply valve 6a and hot water supply valve 6b are closed, power is supplied to the electrodes 142a and 142b.

Furthermore, when changing polarities of DC and supplying power to the electrodes 142a and 142b, it is possible to remove scales attached to the electrodes 142a and 142b. Description of other configurations and functions is omitted because the configurations and functions are the same as those of the case of the second embodiment.

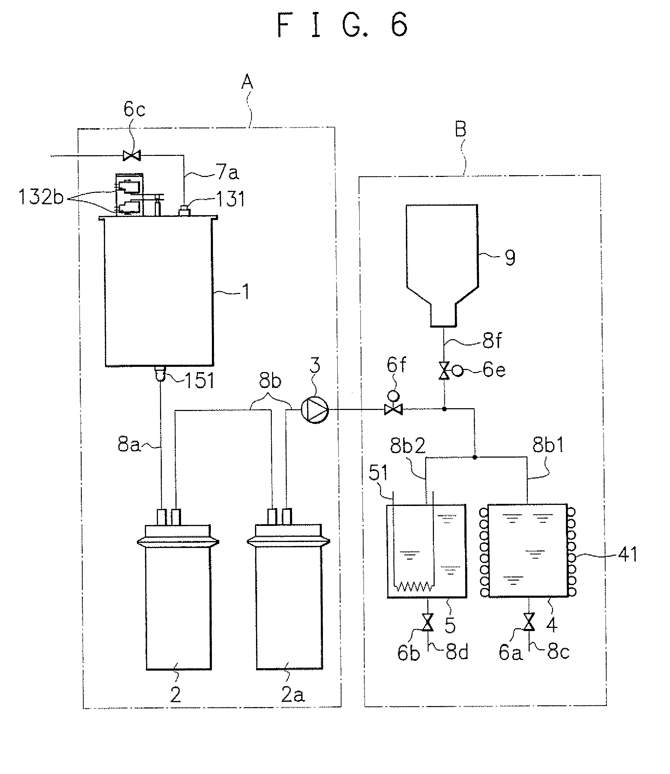

FIG. 6 shows fourth embodiment of an apparatus for supplying mineral water of the present invention. A component same as that of the second embodiment is described by using the same symbol. In the case of this embodiment, a mineral water tank 9 can be connected to the second leading pipe 8b. The mineral water tank 9 stores mineral water. The mineral water tank 9 is connected to the second leading pipe 8b through a mineral water leading pipe 8f. Moreover, a water stop valve 6e is set to the mineral water leading pipe 8f and another water stop valve 6f is set to the downstream side of the pump 3 in the second leading pipe 8b. The water stop valves 6e and 6f can separate the mineral water supply pipe 8f from the second leading pipe 8b.

According to this embodiment, when separating a mineral water generating and purifying portion A having the mineral water generation unit 1, purifying baths 2 and 2a, and pump 3 from a cold water generation portion B having the hot water storage tank, cold water storage tank 4, hot water supply pipe 8d, and cold water supply pipe 8c, the mineral water in the mineral water tank 9 is supplied to the cold water storage tank 4 and hot water storage tank 5. When removing the mineral water tank 9 from the water stop valve 6e, the mineral water in the mineral water generation unit 1 is supplied similarly to the case of the second embodiment. Thus, it is possible to selectively use the mineral water in the mineral water generation unit 1 or the mineral water in the mineral water tank 9. Description of other configurations and functions is omitted because the configurations and functions are the same as the case of the second embodiment.

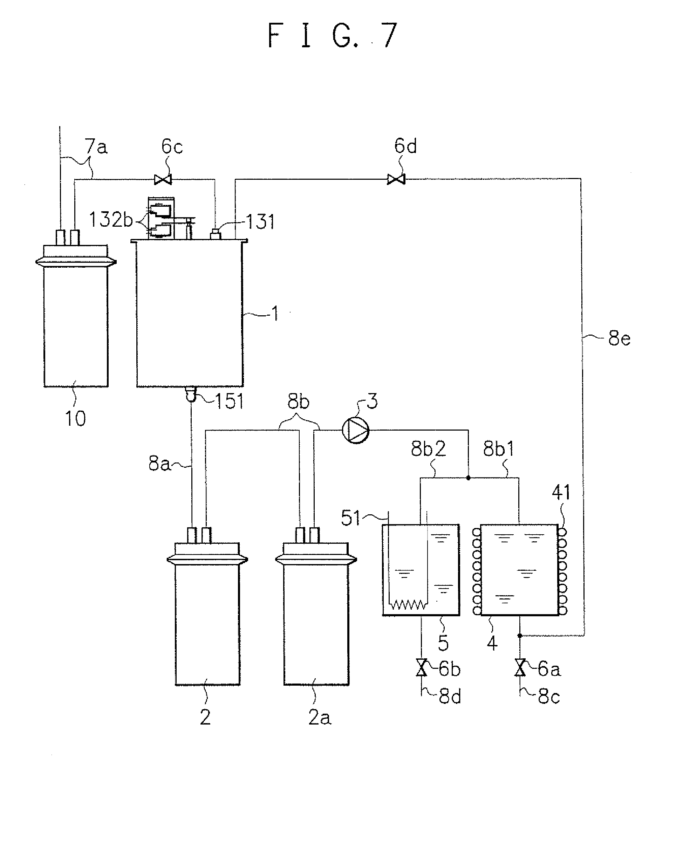

FIG. 7 shows fifth embodiment of an apparatus for supplying mineral water of the present invention. A component same as that of the third embodiment is described by using the same symbol. In the case of this embodiment, a pre-active-carbon filter system 10 is set to the upstream side of the water supply pipe 7a. The pre-active-carbon filter system 10 is packed with active carbon. Thereby, because dust or the like floating on tap water can be previously removed, it is possible to prevent the mineral water generation unit 1 from being contaminated. Description of other configurations and functions is omitted because the configurations and functions are the same as those of the third embodiment.

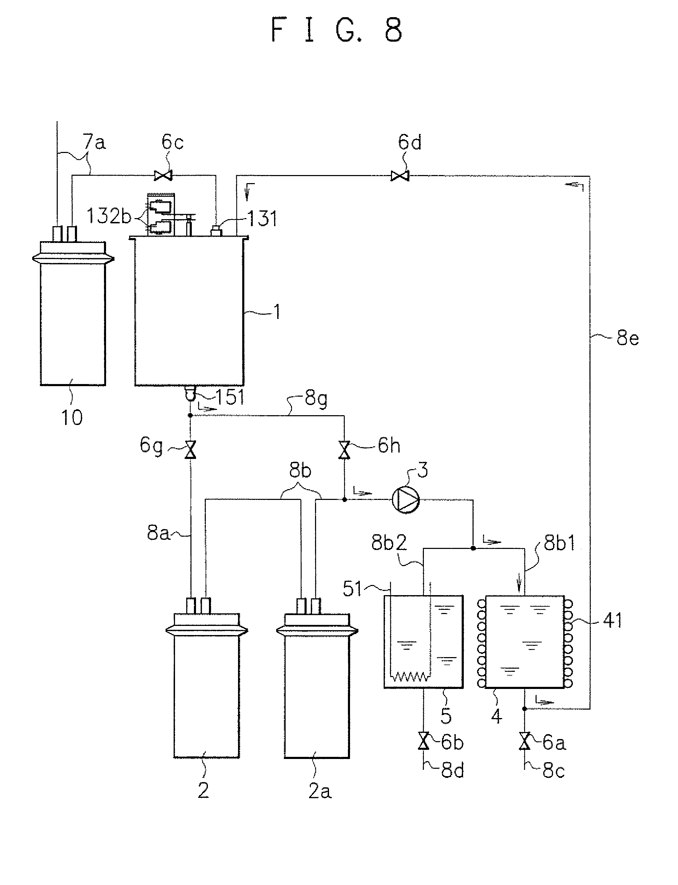

FIG. 8 shows sixth embodiment of an apparatus for supplying mineral water of the present invention. A component same as that of the third embodiment is described by using the same symbol. In the case of this embodiment, a leading valve 6g for controlling circulation of mineral water is set to the first leading pipe 8a. Moreover, the first leading pipe 8a and second leading pipe 8b are connected by a bypass pipe 8g. One end of the bypass pipe 8g is connected between the leading tube 151 and the leading valve 6g. The other end of the bypass pipe 8g is connected between the pump 3 and the purifying bath 2a. Thereby, the bypass pipe 8g bypasses the purifying baths 2 and 2a. The bypass pipe 8g includes a bypass valve 6h for controlling running water.

According to this embodiment, the bypass valve 6h is opened and the water leading valve 6g is closed to drive the pump 3. Thereby, as shown by continuous line arrows in FIG. 8, the mineral water in the cold water storage tank 4 circulates. That is, the mineral water in the cold water storage tank 4 flows from the cold water supply pipe 8c to the return pipe 8e, return valve 6d, and mineral water generation unit 1 in order. Moreover, the mineral water in the mineral water generation unit 1 flows from the first leading pipe 8a to the bypass pipe 8g, the second leading pipe 8b, and cold water storage tank 4 in order. Thereby, it is possible to sterilize a piping system excluding the purifying baths 2 and 2a. Moreover, it is possible to set the hypochlorous concentration of the mineral water in the cold water storage tank 4 to a desired value. Description of other configurations and functions is omitted because the configurations and functions are the same as those of the fifth embodiment.

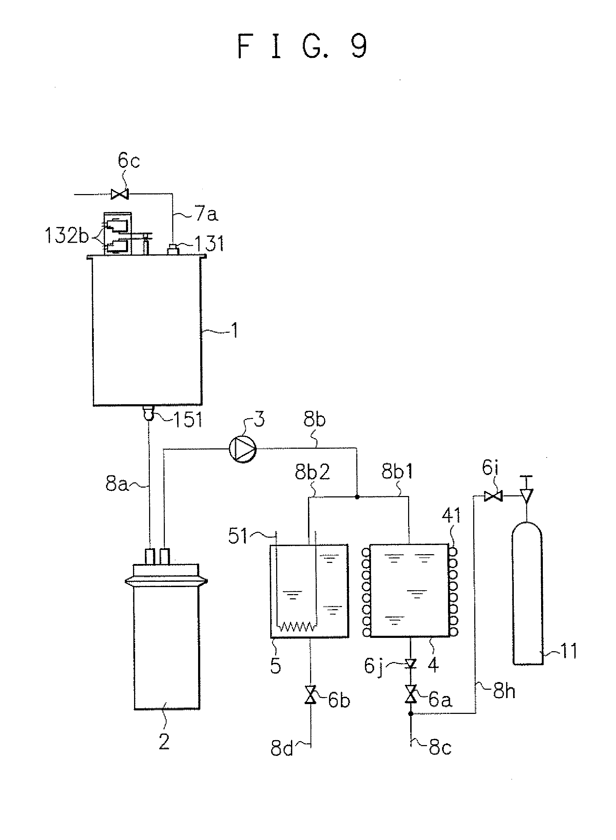

FIG. 9 shows seventh embodiment of an apparatus for supplying mineral water of the present invention. A component same as that of the first embodiment is described by using the same symbol. In the case of this embodiment, a carbon dioxide gas cylinder 11 is set. Moreover, the carbon-dioxide-gas supply pipe 8h of the carbon dioxide gas cylinder 11 is connected to the cold water supply pipe 8c at the downstream side of the cold water supply valve 6a. A gas valve 6i is set to the carbon dioxide gas supply pipe 8h. A check valve 6j for preventing circulation of gas into the cold water storage tank 4 is set to the upstream side of the cold water supply pipe 8c.

According to this embodiment, it is possible to add carbon dioxide gas to cooled mineral water and supply carbonated water. Moreover, the carbonated water has a function for removing scales in a pipe and makes it possible to prevent the cold water supply pipe 8c from clogging. Description of other configurations and functions is omitted because the configurations and functions are the same as those of the first embodiment.

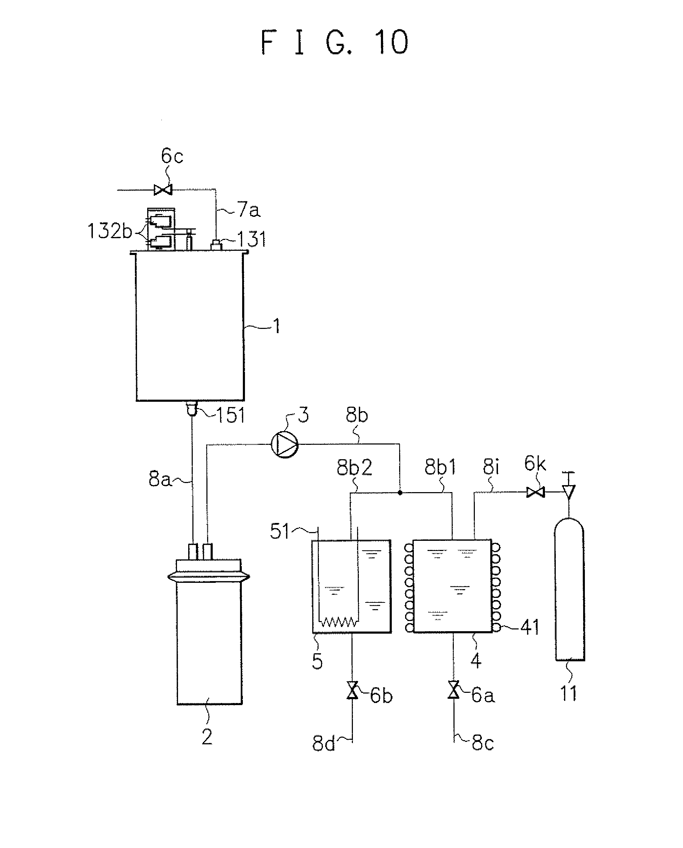

FIG. 10 shows eighth embodiment of an apparatus for supplying mineral water of the present invention. A component same as that of the first embodiment is described by using the same symbol. In the case of this embodiment, the carbon dioxide cylinder 11 is set. Moreover, the carbon-dioxide-gas supply pipe 8i of the carbon dioxide gas cylinder 11 is connected to the cold water storage tank 4. A gas valve 6k is set to the carbon-dioxide-gas supply pipe 8i.

According to this embodiment, it is possible to add carbon dioxide gas to the mineral water in the cold water storage tank 4. The cold water storage tank 4 functions as a carbonator tank. Thereby, it is possible to generate carbonated water in the cold water storage tank 4 and moreover, the sterilizing effect of the cold water storage tank 4 is further improved by the sterilizing effect of the carbonated water. Moreover, carbon dioxide gas also shows a function for preventing scales in the cold water storage tank 4. Furthermore, carbon dioxide gas does not greatly influences the gustatory sense of mineral water like a conventional medicine. Description of other configurations and functions is omitted because the configurations and functions are the same as those of the first embodiment.

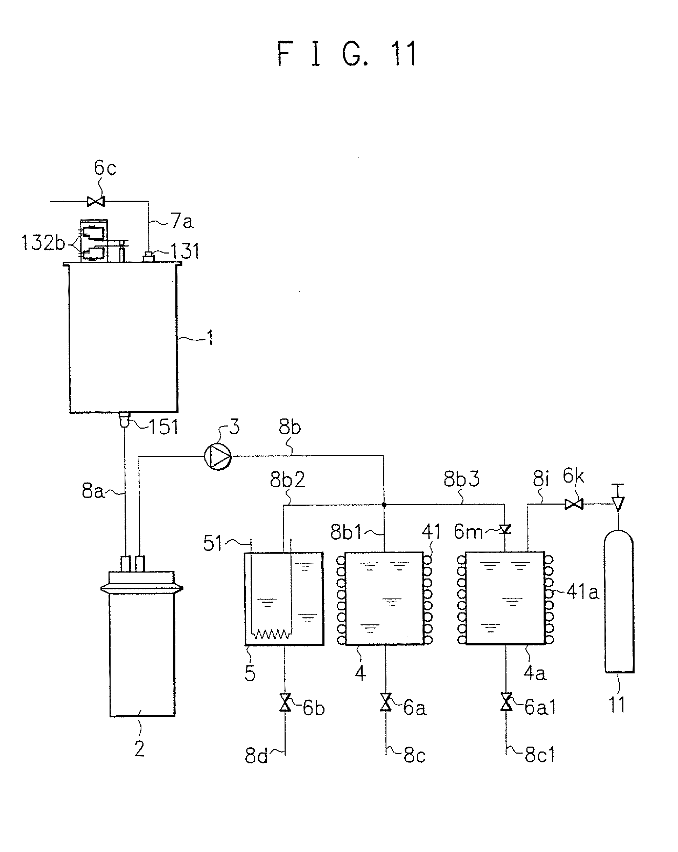

FIG. 11 shows ninth embodiment of an apparatus for supplying mineral water of the present invention. A component same as that of the eighth embodiment is described by using the same symbol. In the case of this embodiment, a carbonator tank 4a for generating carbonated water is set and a third branch pipe 8b3 of the second leading pipe 8b is connected to the carbonator tank 4a. Moreover, a check valve 6m for preventing the back flow of carbon dioxide gas is set to the third branch pipe 8b3. A cooling coil 41a is wound around the carbonator tank 4a similarly to the case of the cold water storage tank 4. Furthermore, the refrigerant of a not-illustrated refrigerator circulates through the cooling coil 41a and the mineral water in the carbonator tank 4a is cooled.

According to this embodiment, it is possible to separately generate cold water not containing carbonic acid and carbonated water. Therefore, it is possible to increase the variation of cold water to be provided for a user. Description of other configurations and functions is omitted because the configurations and functions are the same as those of the eighth embodiment.

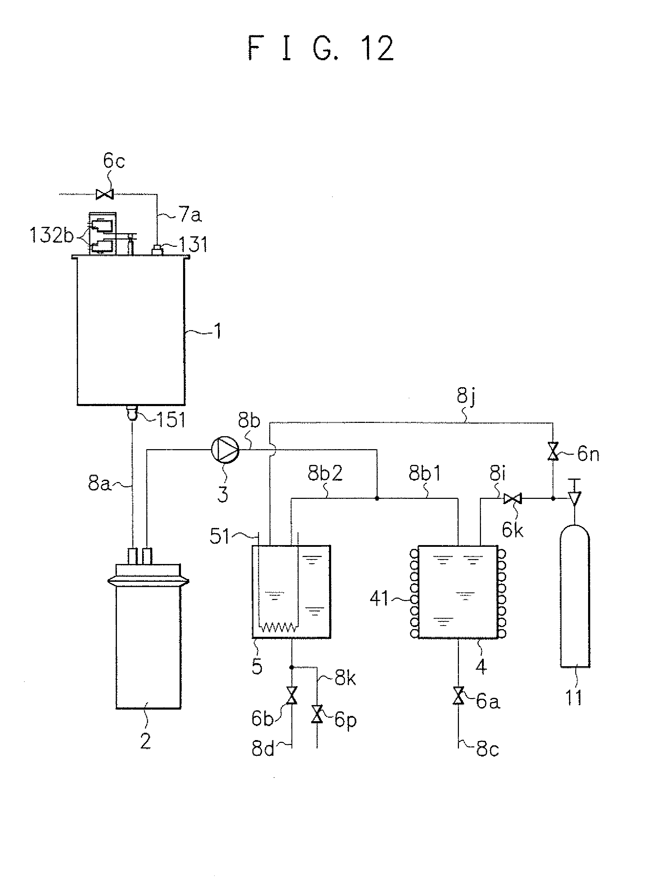

FIG. 12 shows tenth embodiment of an apparatus for supplying mineral water of the present invention. A component same as that of the eighth embodiment is described by using the same symbol. In the case of this embodiment, another carbon-dioxide-gas supply pipe 8j branched from the carbon dioxide gas supply pipe 8i is set. The front end of the carbon-dioxide-gas supply pipe 8j is connected to the hot water storage tank 5. Moreover, a drain pipe 8k is connected to the hot water supply pipe 8d. A drain valve 6p for controlling drain is set to the drain pipe 8k.

According to this embodiment, because carbon dioxide gas can be supplied not only to the cold water storage tank 4 but also to the hot water storage tank 5, it is possible to generate heated carbonated water. Moreover, it is possible to remove scales in the hot water storage tank 5. When removing scales in the hot water storage tank 5, the drain valve 6p is opened. Thereby, the hot water in the hot water storage tank 5 is discharged through the drain pipe 8k. Description of other configurations and functions is omitted because the configurations and functions are the same as those of the eighth embodiment.

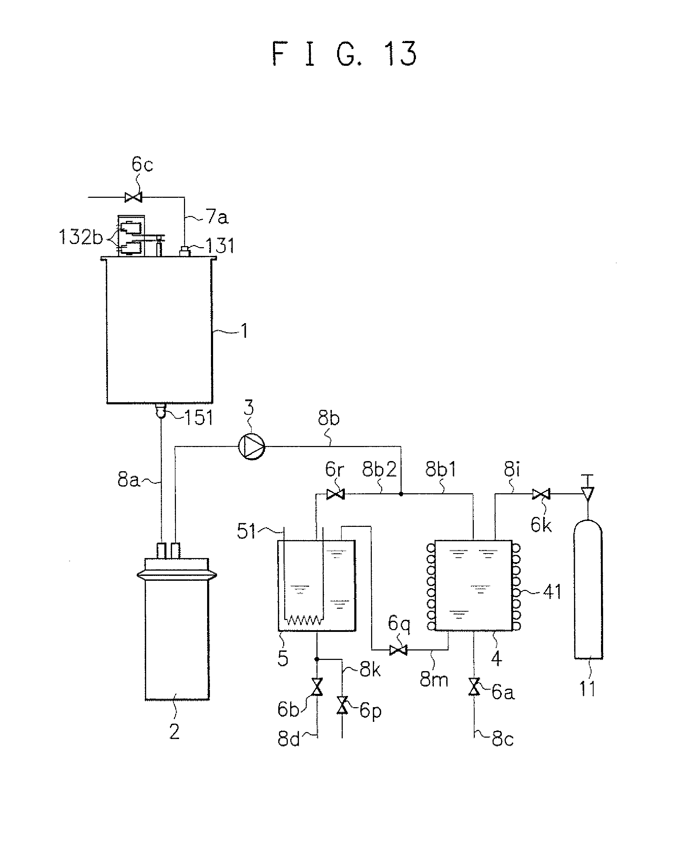

FIG. 13 shows eleventh embodiment of an apparatus for supplying mineral water of the present invention. A component same as that of the eighth embodiment is described by using the same symbol. This embodiment has a carbonated water supply pipe 8m for supplying the carbonated water in the cold water storage tank 4 to the hot water storage tank 5. A carbonated water supply valve 6q is set to the carbonated water supply pipe 8m. Moreover a carbonated water supply valve 6g is set to a carbonated supply pipe 8m, Furthermore the drain pipe 8k and the drain valve 6r are provided as in the case with the tenth embodiment.

According to this embodiment, the gas valve 6k is opened to supply carbon dioxide gas to the cold water storage tank 4 while the carbonated water supply valve 6q and drain valve 6p are opened and other valves 6a and 6b are closed to drive the pump 3. Thereby, carbonated water is generated in the cold water storage tank 4. Moreover, the carbonated water in the cold water storage tank 4 flows to the hot water storage tank 5 through the carbonated water supply pipe 8m and discharged from the drain pipe 8k. Thereby, the carbonated water incoming into the hot water storage tank 5 removes scales in the hot water storage tank 5. The scales removed from the hot water storage tank 5 are discharged to the outside through the drain pipe 8k.

Moreover, though not illustrated, it is allowed to apply the carbonated water supply pipe8m, carbonated water supply valve 6q drain pipe 8k, and drain valve 6p to the ninth embodiment shown in FIG. 11. When using this configuration, the scales in the hot water storage tank 5 are removed by the carbonated water in the carbonator tank 4a. Description of other configurations and functions is omitted because the configurations and functions are the same as those of the eighth embodiment.

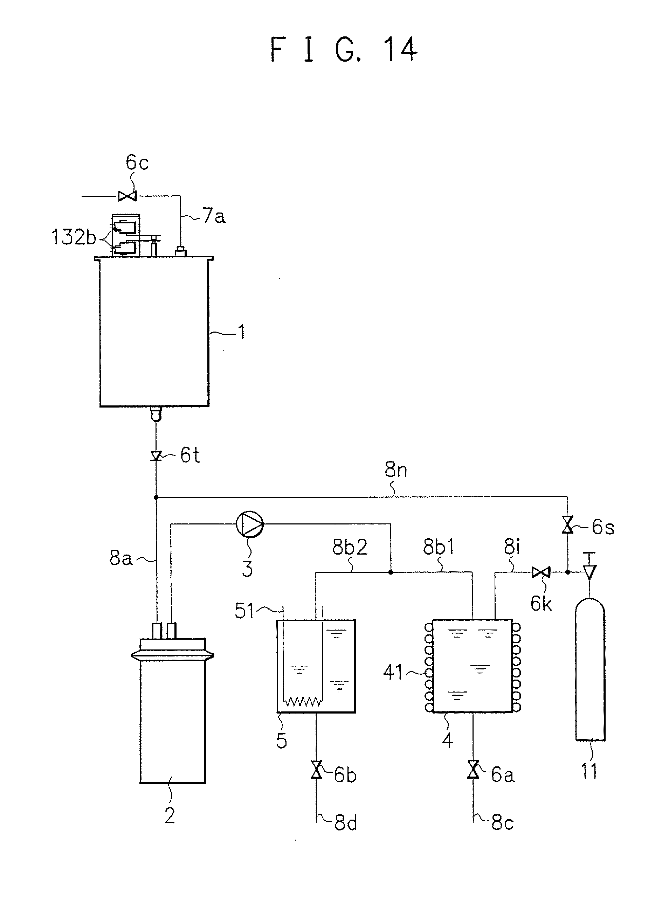

FIG. 14 shows twelfth embodiment of an apparatus for supplying mineral water of the present invention. A component same as that of the eighth embodiment is described by using the same symbol. In the case of this embodiment, another carbon-dioxide-gas supply pipe 8n branched from the carbon dioxide gas supply pipe 8i and having a gas valve 6s is set and the front end of the carbon-dioxide-gas supply pipe 8n is connected to the first leading pipe 8a. Moreover, a check valve 6t is set to the mineral water generation unit 1 side in the first leading pipe 8a so that carbon dioxide gas does not enter the mineral water generation unit 1.

According to this embodiment, it is possible to mix carbon dioxide gas with mineral water by opening the gas valve 6s when supplying the mineral water in the mineral water generation unit 1 to the tanks 4 and 5. Therefore, it is possible to generate mineral water having a high carbonic-acid concentration in the tanks 4 and 5. Description of other configurations and functions is omitted because the configurations and functions are the same as those of the eighth embodiment.

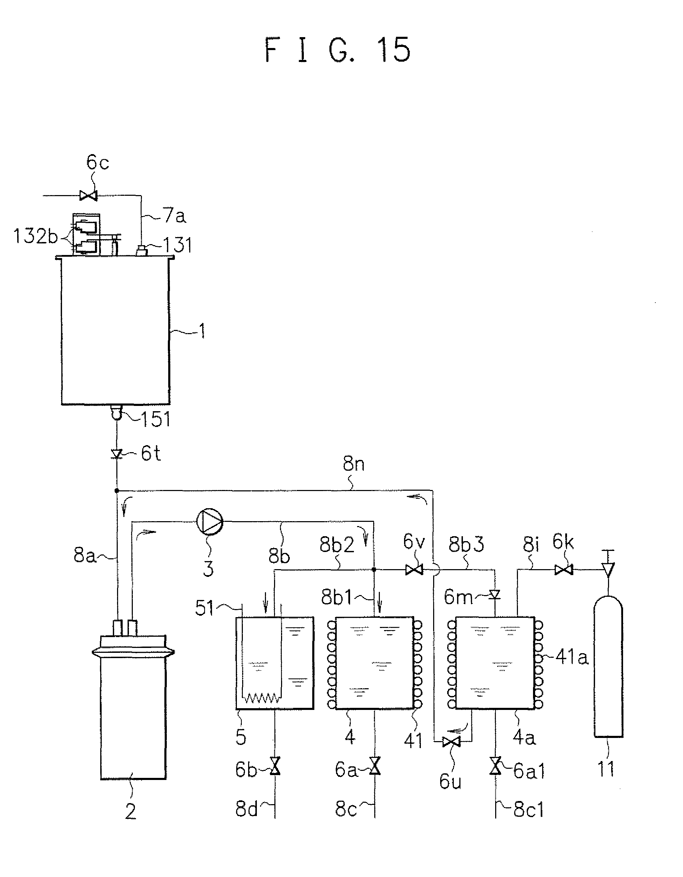

FIG. 15 shows thirteenth embodiment of an apparatus for supplying mineral water of the present invention. A component same as that of the ninth embodiment is described by using the same symbol. This embodiment has a carbonated water supply pip 8p for supplying the carbonated water generated by the carbonator tank 4a to the first leading pipe 8a. Moreover, a branch valve 6v is set to the third branch pipe 8b3.

According to this embodiment, the gas valve 6k is opened to supply carbon dioxide gas to the carbonator tank 4a. Thereby, carbonated water is generated in the carbonator tank 4a. Moreover, a carbonated water supply valve 6u is opened and other valves 6a, 6b, and 6v are closed to drive the pump 3. Thereby, as shown by the continuous line in FIG. 15, the carbonated water in the carbonator tank 4a flows from the carbonated water supply pipe 8p to the first leading pipe 8a, purifying bath 2, second leading pipe 8b, first and second branch pipes 8b1 and 8b2, cold water storage tank 4, and hot water storage tank 5 in order. Therefore, the sterilizing function and removal function of piping systems extending from the first leading pipe 8a to the tanks 4 and 5 are exhibited. Moreover, because mineral carbonated water is generated by the cold water storage tank 4 and hot water storage tank 5, the sterilizing effect in each tank 4 is improved.

Furthermore, though carbonated water in the carbonator tank 4a is supplied to the first leading pipe 8a in the case of this embodiment, the embodiment can be also applied to the type having the cold water storage tank 4 but not having the carbonator tank 4a. Though not illustrated, when using a configuration of supplying the carbonated water generated in the cold water storage tank 4 of the eighth embodiment to the first leading pipe through the carbonated water supply pipe, the same function can be exhibited. Description of other configurations and functions is omitted because the configurations and functions are the same as those of the ninth embodiment.

### INDUSTRIAL APPLICABILITY OF THE INVENTION

An apparatus for supplying mineral water of the present invention is useful not only for a business-use beverage dispenser for selling beverage but also for a drinking water feeder for improving the water quality of household drinking water.

## Claims

1. An apparatus for supplying mineral water comprising:
a mineral water generation means having an electrolytic bath in which chlorine-ion containing water is stored, a mineral eluting electrode for applying a DC voltage to chlorine-ion containing water to electrolyze the chlorine-ion containing water, and a mineral eluted substance containing a mineral component that is eluted by electrolytic water of chlorine-on containing water;
a mineral water leading means for leading the mineral water generated by the mineral water generation means;
a cold water storage tank in which the mineral water led through the mineral water leading means is stored and cooled; and
a cold water supply means for supplying the mineral water in the cold water storage tank.

2. An apparatus for supplying mineral water comprising:
A mineral water generation means having an electrolytic bath in which chlorine-ion containing water is stored, a mineral eluting electrode for applying a DC voltage to the chlorine-ion containing water to electrolyze the chlorine-ion containing water, and a mineral eluted substance containing a mineral component that is eluted by electrolytic water of chlorine-on containing water;
a mineral water leading means for leading the mineral water generated by the mineral water generation means;
a cold water storage tank in which the mineral water led through the mineral water leading means is stored and cooled;
a cold water supply means for supplying the mineral water in the cold water storage tank;
a hot water storage tank in which the mineral water lead through the mineral water leading means is stored and heated; and
a hot water supply means for supplying the mineral water in the hot water storage tank.

3. The apparatus for supplying mineral water according to claim 2, wherein
the mineral water leading means has a pump for forcibly supplying the mineral water generated by the mineral water generation means to the cold water storage tank and the hot water storage tank.

4. The apparatus for supplying mineral water according to claim 3, wherein
the mineral water leading means has a purifying bath for purifying mineral water.

5. The apparatus for supplying mineral water according to claim 4, wherein
at least one purifying bath is included and a purifying member constituted by active carbon or a purifying member constituted by both the active carbon and a hollow-yarn film is packed into the purifying bath.

6. The apparatus for supplying mineral water according to claim 4, wherein
a mineral-water generation and purifying portion having the mineral water generation means, the purifying bath, and the pump and a cold-and-hot water generation portion having the cold water storage tank, the hot water storage tank, the cold water supply means and the hot water supply means is included,
the cold-and-hot water generation portion has a mineral water storage tank for supplying mineral water to the cold water storage tank and the hot water storage tank, and
the mineral water leading means connects the mineral water generation and purifying portion and the cold-and-hot water generation portion so that they can be separated.

7. The apparatus for supplying mineral water according to claim 4, wherein
a water supply pipe for supplying the chlorine-ion containing water to the electrolytic bath is included, and
a pre-active carbon filter system for purifying chlorine-ion containing water is set to the water supply pipe.

8. The apparatus for supplying mineral water according to claim 4, wherein
a return pipe for leading the mineral water in the cold water storage tank to the electrolytic bath is included, and
an opening/closing valve for controlling circulation of mineral water is set to the return pipe.

9. The apparatus for supplying mineral water according to claim 8, wherein
a bypass pipe is included which leads the mineral water generated by the mineral water generation means to the cold water storage tank and the hot water storage tank by bypassing the purifying bath.

10. The apparatus for supplying mineral water according to claim 8, wherein
the cold water supply means has a cold water supply valve for controlling supply of mineral water and the hot water supply means has a hot water supply valve for controlling supply of mineral water.

11. The apparatus for supplying mineral water according to claim 9, wherein
the cold water supply means has a cold water supply valve for controlling supply of mineral water and the hot water supply means has a hot water supply valve for controlling supply of mineral water.

12. The apparatus for supplying mineral water according to claim 10, wherein
when the cold water supply valve and the hot water supply valve are closed for a predetermined time, the mineral water in the electrolytic bath is supplied through the mineral water leading means to the cold water storage tank, and the mineral water in the cold water storage tank is returned through the return pipe to the electrolytic bath.

13. The apparatus for supplying mineral water according to claim 11, wherein
when the cold water supply valve and the hot water supply valve are closed for a predetermined time, the mineral water in the electrolytic bath is supplied through the bypass pipe to the cold water storage tank, and the mineral water in the cold water storage tank is returned through the return pipe to the electrolytic bath.

14. The apparatus for supplying mineral water according to claim 12, wherein
when the cold water supply valve and the hot water supply valve are closed for the predetermined time, the DC voltage is applied to the chlorine-ion containing water through the mineral eluting electrode.

15. The apparatus for supplying mineral water according to claim 13, wherein
when the cold water supply valve and the hot water supply valve are closed for the predetermined time, the DC voltage is applied to the chlorine-ion containing water through the mineral eluting electrode.

16. The apparatus for supplying mineral water according to claim 14, wherein
when the cold water supply valve and the hot water supply valve are closed for the predetermined time, and the DC voltage is applied to the chlorine ion-containing water through the mineral eluting electrode, a polarity is changed.

17. The apparatus for supplying mineral water according to claim 15, wherein
when the cold water supply valve and the hot water supply valve are closed for the predetermined time, and the DC voltage is applied to the chlorine-ion containing water through the mineral eluting electrode, a polarity is changed.

18. An apparatus for supplying mineral water comprising:
a mineral water generation means having an electrolytic bath in which chlorine-ion containing water is stored, a mineral eluting electrode for applying a DC voltage to the chlorine-ion containing water to electrolyze the chlorine-ion containing water, and a mineral eluted substance containing a mineral component that is eluted by electrolytic water of chlorine-on containing water;
a mineral water leading means for leading the mineral water generated by the mineral water generation means;
a cold water storage tank in which the mineral water led through the mineral water leading means is stored and cooled;
a cold water supply means for supplying the mineral water in the cold water storage tank;
a hot water storage tank in which the mineral water led through the mineral water leading means is stored and heated;
a hot water supply means for supplying the mineral water in the hot water storage tank;
a carbon dioxide gas cylinder in which carbon dioxide gas is stored; and
a carbon dioxide gas supply means for leading the carbon dioxide gas in the carbon dioxide gas cylinder to the cold water supply means.

19. An apparatus for supplying mineral water comprising:
a mineral water generation means having an electrolytic bath in which chlorine-ion containing water is stored, a mineral eluting electrode for electrolyzing the chlorine-ion containing water, and a mineral eluted substance containing a mineral component that is eluted by electrolytic water of chlorine-on containing water;
a mineral water leading means for leading the mineral water generated by the mineral water generation means;
a hot water storage tank in which the mineral water led through the mineral water leading means is stored and heated;
a hot water supply means for supplying the mineral water in the hot water storage tank;
a cold water storage tank in which the mineral water led through the mineral water leading means is stored and cooled;
a cold water supply means for supplying the mineral water in the cold water storage tank;
a carbon dioxide gas cylinder in which carbon dioxide gas is stored; and
a carbon dioxide gas supply means for leading the carbon dioxide gas in the carbon dioxide gas cylinder to the cold water storage tank.

20. An apparatus for supplying mineral water comprising:
a mineral water generation means having a mineral eluting electrode for applying a DC voltage to chlorine-ion containing water to electrolyze chlorine-ion containing water and mineral eluted substances from which mineral components are eluted;
a cold water storage tank in which the mineral water led through the mineral water leading means is stored and cooled;
a cold water supply means for supplying the mineral water in the cold water storage tank;
a hot water storage tank in which the mineral water led through the mineral water leading means is stored and heated;
a hot water supply means for supplying the mineral water in the hot water storage tank;
a carbonator tank in which the mineral water led by the mineral water leading means is stored;
a carbon dioxide gas cylinder for leading the carbon dioxide gas in the carbon dioxide gas cylinder to the carbonator tank; and
a carbon dioxide gas supply means for leading the carbon dioxide gas in the carbon dioxide gas cylinder to the carbonator tank.

21. The apparatus for supplying mineral water according to claim 19, wherein
an another carbon dioxide gas supply means is included which leads the carbon dioxide gas in the carbon dioxide gas cylinder to the hot water storage tank.

22. The apparatus for supplying mineral water according to claim 21, wherein
a drain means is set to the hot water supply means.

23. The apparatus for supplying mineral water according to claim 19, wherein
a carbonated water supply pipe for leading the carbonated water generated by the cold water storage tank to the hot water storage tank and a valve mechanism for alternately controlling the flow of the carbonated water led to the hot water storage tank through the carbonated water supply pipe and the flow of the mineral water led to the hot water storage tank through the mineral water leading means are included.

24. The apparatus for supplying mineral water according to claim 19, wherein
the following are included: a carbonated water supply pipe for leading the carbonated water generated by the carbonator tank and a valve mechanism for alternately controlling the flow of the carbonated water led to the hot water storage tank through the carbonated water supply pipe and the flow of the mineral water led to the hot water storage tank through the mineral water leading means.

25. The apparatus for supplying mineral water according to claim 19, wherein
a gas circulation pipe is included which leads the carbonated water stored in the carbon dioxide gas cylinder to the mineral water leading means.

26. The apparatus for supplying mineral water according to claim 19, wherein
a carbonated water supply pipe is included which leads the carbonated water in the cold water storage tank to the mineral water leading means.

27. The apparatus for supplying mineral water according to claim 20, wherein
a carbonated water supply pipe is included which leads the carbonated water in the cold water storage tank to the mineral water leading means.
